# EUROPEAN PATENT APPLICATION

(11) **EP 3 343 055 A1**
(43) Date of publication of application: **04.07.2018**
(21) Application number: 16838918.7
(22) Date of filing: 01.07.2016
(51) Int. Cl.: F16D 3/79

(54) **POWER TRANSMISSION DEVICE**

(30) Priority: 25.08.2015 JP 2015165323
(71) Applicant: Hitachi Automotive Systems, Ltd., Hitachinaka-shi Ibaraki 312-8503 (JP)
(72) Inventor: TSUTSUMI, Daiki, Atsugi-shi Kanagawa 243-8510 (JP); MASUDA, Toshiyuki, Atsugi-shi Kanagawa 243-8510 (JP); KOMAI, Hiromichi, Atsugi-shi Kanagawa 243-8510 (JP)
(74) Representative: Grünecker Patent- und Rechtsanwälte PartG mbB
(86) International application number: PCT/JP2016/069576
(87) International publication number: WO 2017/033571

(57) **Abstract**

A power transmission device includes an annular plate 6 including an insertion hole 10, and having an axial elastic force; a first yoke 4 including a first connection hole 7, and connected to the annular plate 6 by a first tightening bolt 11 inserted through the first connection hole and the insertion hole; a sleeve member 13 disposed within the first connection hole and the insertion hole, and through which the first tightening bolt is inserted; and a ring member 16 disposed within the first connection hole, including an outer circumference surface 16a abutted on an inner circumference surface of the first connection hole, and a through hole 17 through which the sleeve member is inserted to penetrate. With this, it is possible to handle only by varying a shape of the ring member 16 even when an inside diameter of the first connection hole 7 is varied.

## Description

### Technical Field

This invention relates to a power transmission device of a propeller shaft and so on of a vehicle, and specifically to a power transmission device to which a plurality of shaft elements are connected through a shaft coupling having a vibration absorption function in an axial direction.

### Background Art

There is known a power transmission device described in a following patent document 1. This power transmission device includes first and second connection members which are provided at end portions of shaft elements that confronts each other; and annular coupling member disposed between the first and second connection members.

Each of the first and second connection members includes bifurcated arms having a trifurcate-shape (three-forked shape) bifurcated in radial directions at a regular interval; and connection holes each of which is formed at one of tip end portions of the bifurcated arm, and each penetrates through the one of the tip end portions of the bifurcated arm. On the other hand, the coupling member includes six through holes which are formed at a substantially regular interval in a circumferential direction, and each of which penetrates through the coupling member.

Nuts are tightened on external screw portions of bolts inserted through the insertion holes and the connection holes which are superimposed with each other, so that the connection members and the coupling member are connected with each other. A power transmission between the connection members and the coupling member is performed based on an axial force (tightening force) generated between the bolt and the nut.

However, in a recent year, a high power output and a size reduction are attained in many vehicles. In a case where the conventional power transmission device in which the power is transmitted only by the axial force is applied in these vehicles, the slippages are easy to be generated between the connection members and the coupling members. Accordingly, the looseness is generated in the bolt in accordance with the slippages.

Therefore, there is developed a power transmission device which is described in a patent document 2, and in which another force is used in addition to the axial force. In this power transmission device, first and second connection members provided at end portions of shaft elements which confronts each other, and a coupling member disposed between the both connection members are tightened by bolts and fixing pins.

Each of the fixing pins includes a disk-shaped head portion; a cylindrical tube portion extending from an inner circumference portion in an axial direction; and an internal screw portion which is formed in the inside in the axial direction, on which an external screw portion of the bolt is screwed. Moreover, in the fixing pins, the fixing pins are inserted from the side of the coupling member into the insertion holes and the connection holes which are superimposed each other. Tip end portions of the fixing pins are press-fit in positioning large diameter portions which are formed on hole edges of connection holes on a side of the coupling member.

By this configuration, the connection members and the coupling member can transmit the power between the connection members and the coupling member by shearing force acted to the tip end portions of the tube portions of the fixing pin, in addition to the axial force generated between the bolts and the head portions of the fixing portions. Consequently, the slippages between the connection members and the coupling member are hard to be generated, so that the looseness of the bolts are suppressed.

### Prior Art Document

### Patent Document

Patent Document 1: Japanese Patent Application Publication No. 2002-115727
Patent Document 2: Japanese Patent Application Publication No. 11-230186

### Summary of The Invention

By the way, in a case where the constituting elements of the different vehicle such as the propeller shaft and the output shaft of the transmission are connected, specifications and shapes of the first and second connection members are often different from each other. In this case, the power transmission device of the patent document 2 is applied, outside diameters of the tube portions of the fixing pins, inside diameters of the insertion holes of the coupling member needs to be varied in accordance with inside diameters of the connection holes (large diameter hole portions) of the connection members. Accordingly, the operation process may be complicated. The cost may be increased.

It is, therefore, an object of the present invention to provide a power transmission device devised to solve the above-described conventional problems, and to easily mount to the connection members having different specification and different shapes only by slight change while suppressing the looseness of the bolts.

A power transmission device according to the present invention comprises: a coupling member which has an annular shape, which includes an insertion hole, and which has an elastic force in an axial direction; a connection member which includes a connection hole, and which is connected to the coupling member by a bolt inserted through the connection hole and the insertion hole; a sleeve member which is disposed within the connection hole and the insertion hole, and within which the bolt is inserted; and a ring member which is disposed within the connection hole, which includes an outer circumference surface abutted on an inner circumference surface of the connection hole, and which includes a through hole through which the sleeve member is inserted to penetrate.

In the present invention, it is possible to mount to the connection members having different specifications and different shapes while suppressing the looseness.

### Brief Description of Drawings

FIG. 1 is a partially sectional front view showing a propeller shaft in a first embodiment of the present invention.
FIG. 2 is a perspective view showing a main part of the power transmission device according to this embodiment.
FIG. 3 is a partially sectional perspective view showing the main part of the power transmission device.
FIG. 4 is a sectional view showing the main part of the power transmission device.
FIG. 5 is a perspective view showing a state where a sleeve member and so on is mounted to an annular plate according to this embodiment.
FIG. 6 is a perspective view showing the sleeve member and a second flange member which are integrally formed.
FIG. 7 is a sectional view showing a variation of this embodiment.
FIG. 8 is a partially sectional perspective view showing a main part of a power transmission device according to a second embodiment.
FIG. 9 is a sectional view showing the main part of the power transmission device according to the second embodiment.
FIG. 10 is a sectional view showing a variation of the second embodiment.

### Description of Embodiments

Hereinafter, power transmission devices (power transmitting devices) according to embodiments of the present invention are explained in detail with reference to the drawings.

### [First Embodiment]

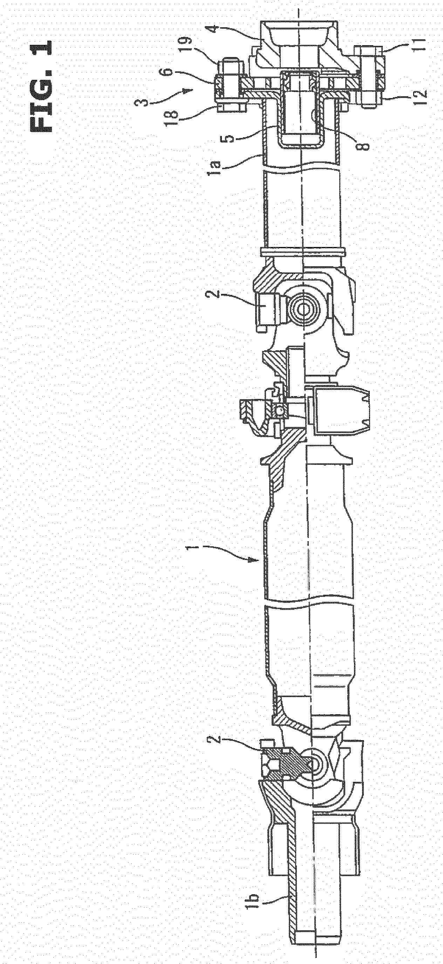

As shown in FIG. 1, the power transmission device according to this embodiment is provided with a propeller shaft 1 which is a tube member. This propeller shaft 1 is constituted by a plurality of shafts connected by universal joints 2. The propeller shaft 1 includes one end portion 1a which is located on a right side of the drawing, and which is connected through a shaft coupling 3 to a transmission (not shown); and the other end portion 1b which is located on a left side of the drawing, and which is connected to a differential gear (not shown). With this, this propeller shaft 1 is arranged to transmit a power outputted from an output shaft (not shown) of the transmission which is a drive shaft, to the differential gear.

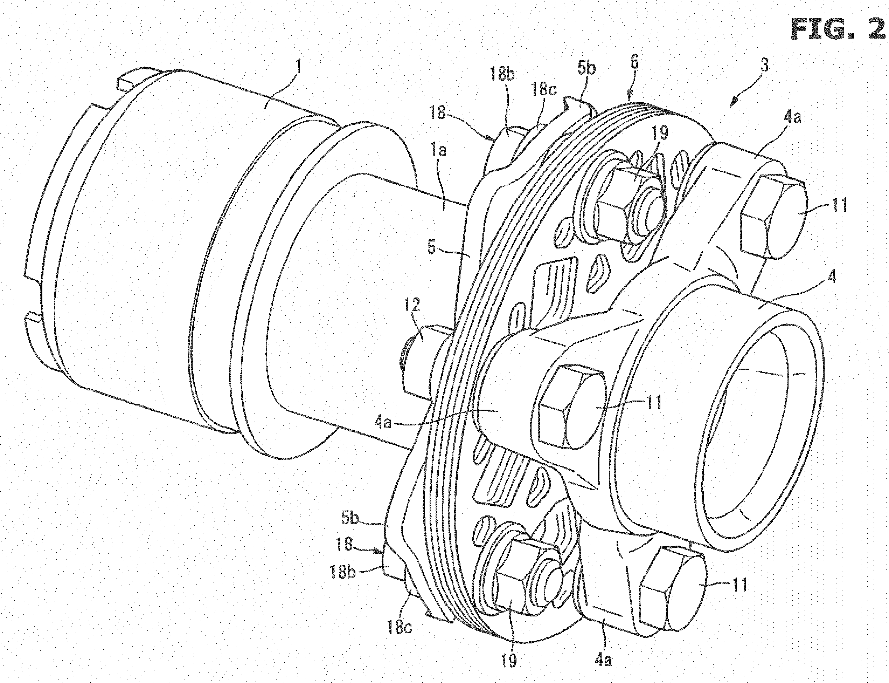

As shown in FIG. 1 to FIG. 4, the shaft coupling 3 includes a first yoke 4 which is a first connection member (first joint member), and which is connected to the output shaft of the transmission; a second yoke which is a second connection member (second joint member), and which is fixed to the one end portion 1a of the propeller shaft 1 by the welding; and an annular plate 6 which is disposed between the yokes 4 and 5, and which is an annular coupling member having an axial elastic force.

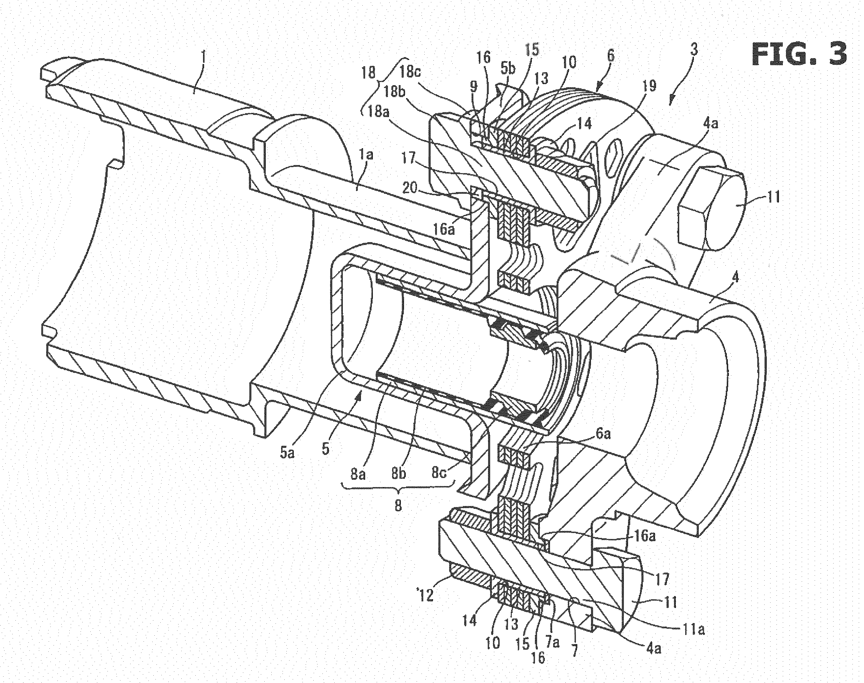

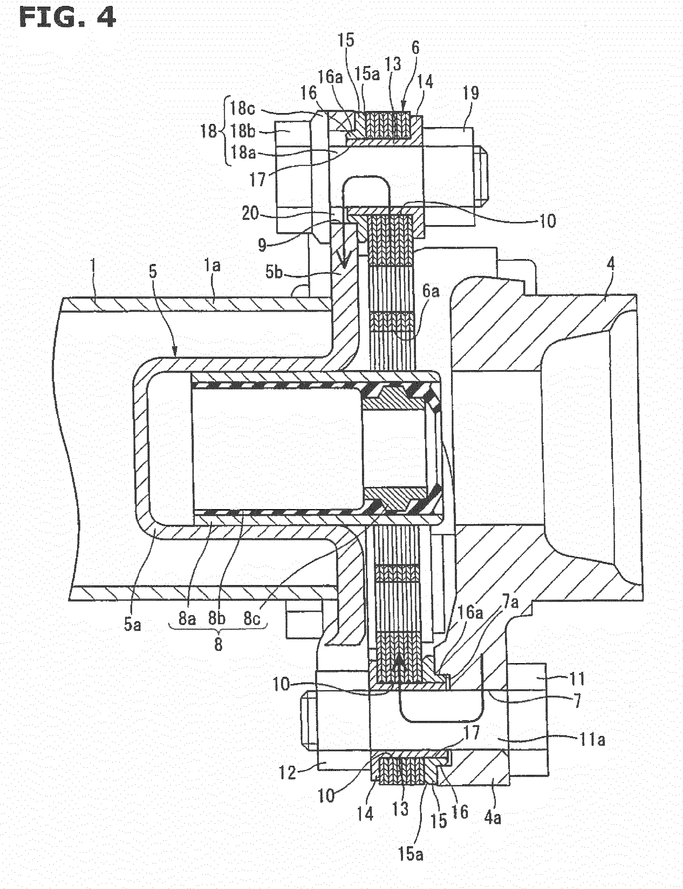

The first yoke 4 is formed, for example, by forging into a substantially cylindrical shape. The first yoke 4 includes bifurcated arms 4a which are integrally formed on an outer circumference portion of the first yoke 4 at a regular interval in a circumferential direction, and which extend in a trifurcate-shape (three-forked shape) in radially outward directions. Each of the bifurcated arms 4a has a relatively large axial thickness. As shown in FIG. 3 and FIG. 4, each of the bifurcated arms 4a includes a first connection hole 7 which is formed at a tip end portion of the each of the bifurcated arms 4a to penetrate in the axial direction, and through which a shaft portion 11a of one of three first tightening bolts 11 (described later) is inserted.

Each of the first connection holes 7 includes a positioning hole portion 7a which is formed at a hole edge which is on a side of the annular plate 6, and which has a diameter greater than a diameter of the each of the first connection holes 7. The positioning holes 7a are arranged to be engaged with ring members 16 (described later) at a temporary assembly of the shaft coupling 3, and thereby to position circumferential positions of the first yoke 4 and the annular plate 6.

The second yoke 5 is formed by press-forming a metal sheet. The second yoke 5 includes a bottomed cylindrical wall 5a recessed on a side of the other end portion 1b of the propeller shaft 1; and bifurcated arms 5b each extend in a trifurcate-shape (three-forked shape) from an opening end of the bottomed cylindrical wall 5a in radially outward directions.

A centering mechanism 8 is disposed within the bottomed cylindrical wall 5a. The centering mechanism 8 is arranged to center the output shaft of the transmission with respect to the propeller shaft 1.

This centering mechanism 8 includes a cylindrical wall 8a which is made from metal, which is press-fit in an inner circumference surface of the bottomed cylindrical wall 5a, and which extends on a side of the transmission through a large diameter hole portion 6a that is formed at a central position of the annular plate 6; an elastic annular member 8b which is made from synthetic rubber, and which is fixed on an inner circumference of the cylindrical wall 8a by vulcanization adhesive and so on; and a bush member 8c which has an annular shape, which is made from metal, and which is mounted in an inner circumference of the elastic annular member 8b. The centering mechanism 8 is arranged to constantly center the output shaft of the transmission inserted into the bush member 8c, with respect to the propeller shaft 1 through the elastic force of the elastic annular member 8b.

Each of the bifurcated arms 5b includes a second connection hole 9 which is formed at a tip end portion of the each of the bifurcated arms 5b to penetrate in the axial direction, and through which a shaft portion 18a of one of three second tightening bolts 18 (described later) is inserted.

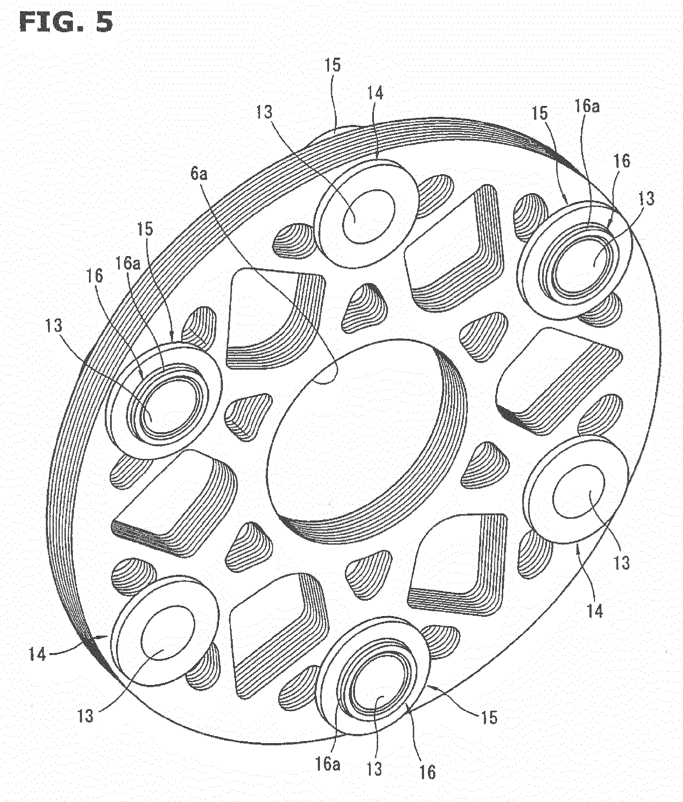

As shown in FIG. 1 to FIG. 5, the annular plate 6 is laminated (stacked) plates formed by laminating (stacking) a plurality of plate members made from the metal. The annular plate 6 has punched portions which are evenly formed in a circumferential direction for reducing the weight, and ensuring the flexibility at the absorption of the vibration in the axial direction. Furthermore, the annular plate 6 includes six insertion holes 10 which are formed at a substantially regular interval in the circumferential direction to penetrate in the axial direction, as shown in FIG. 3 and FIG. 4.

The first yoke 4 and the annular plate 6 are disposed so that the first connection holes 7 and the insertion holes 10 are superimposed with each other. The first yoke 4 and the annular plate 6 are connected by tightening the first connection holes 7 and the insertion holes 10 by first tightening bolts 11 and nuts 12, so as to rotate as unit with each other.

A cylindrical sleeve member 13 is mounted on an outer circumference surface of the shaft portion 11a of each of the first tightening bolts 11. The sleeve members 13 are made from the metal. Each of the sleeve members 13 is disposed to extend between a part of the first connection hole 7 and the insertion hole 10, as shown in FIG. 3 and FIG. 4. Each of the sleeve members 13 has an inside diameter slightly greater than an outside diameter of the shaft portion 11a. An inner circumference surface of the each of the sleeve member 13 is not contacted on the outer circumference surface of one of the shaft portion 11a.

Moreover, each of the sleeve member 13 is integrally formed with an annular flange member 14 which is formed at one end portion that is located on a side of the nut 12, and which is a washer member disposed between the nut 12 and the annular plate 6.

Furthermore, annular members 15 are provided, as an independent (different) member, to the other end portions of the sleeve members 13 which are located on a side of the bifurcated arm 4a of the first yoke 4. Each of the annular members 15 is a washer member disposed between the bifurcated arm 4a and the annular plate 6. These annular members 15 are made from the metal. Each of the annular members 15 is fixed by the press fit on the other end portion of one of the sleeve members 13 through a penetrating hole 17 formed in the annular member 15 and the ring member 16 (described later) to penetrate through the annular member 15 and the ring member 16.

The flange members 14 and the annular members 15 serve as washers. The flange members 14 and the annular members 15 are arranged to clamp the annular plate 6 in the axial direction.

Moreover, each of the annular members 15 has a diameter greater than a diameter of one of the flange member 14. Each of the annular members 15 includes a chamfering portion 15a which is formed on an outer circumference edge of an end surface of the annular member 15 that is abutted on a side end surface of the annular plate 6 in the axial direction.

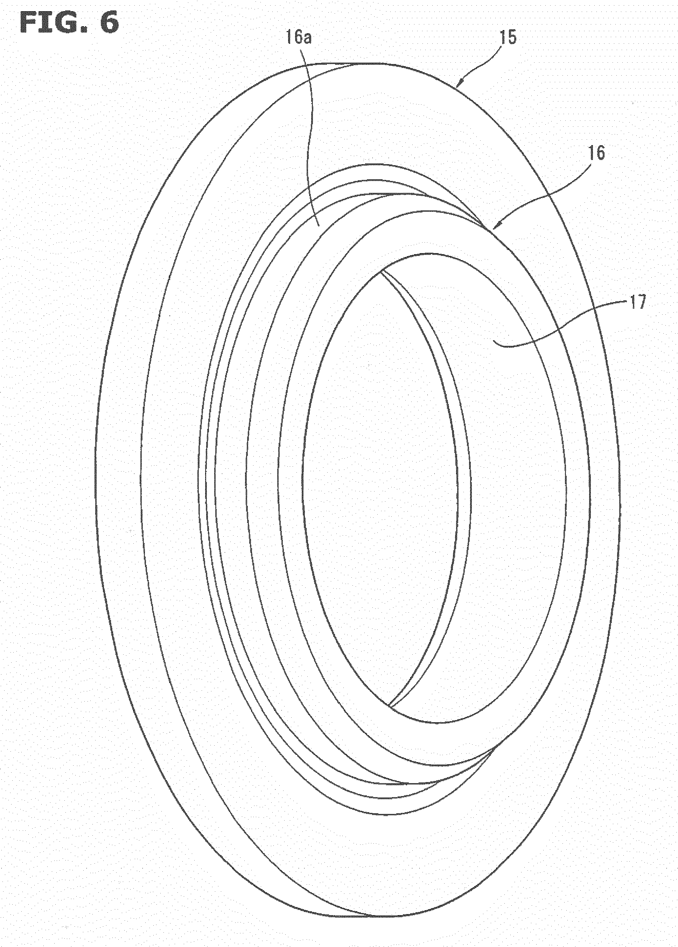

Furthermore, as shown in FIG. 3 to FIG. 6, an annular ring member 16 is integrally provided on an outer end surface of each of the annular member 15 which is on a side of the shaft portion 11a of the first tightening bolt 11. Each of the ring members 16 is an engagement raised portion extending from the inner circumference side of the annular member 15 in the axial direction.

As shown in FIG. 3 and FIG. 4, each of the ring members 16 has an outside diameter which is substantially identical to the inside diameter of the positioning hole 7a of the first connection hole 7. Each of the ring members 16 is inserted and engaged in one of the positioning hole portions 7a at the tightening of the first tightening bolt 11 and the nut 12. An outer circumference surface 16a of each of the ring members 16 is abutted on the inner circumference surface of one of the positioning hole portions 7a.

Each of the through holes 17 is formed to extend between the annular member 15 and the ring member 16 to penetrate through the annular member 15 and the ring member 16. The annular member 15 and the ring member 16 are press-fit on the other end portion of the sleeve member 13 through the penetrating hole 17, so as to be fixed to the sleeve member 13.

Moreover, the second yoke 5 and the annular plate 6 are disposed so that the second connection holes 9 and the insertion holes 10 are superimposed with each other. The second yoke 5 and the annular plate 6 are connected by tightening the second connection holes 9 and the insertion holes 10 by second tightening bolts 18 and nuts 19, so as to rotate as a unit with each other.

Hereinafter, details of the tightening between the second connection holes 9 and the insertion holes 10 by the second tightening bolts 18 and the nuts 19 are explained. However, the configuration identical to the above-described configuration of the tightening between the first connection holes 7 and the insertion holes 10 is omitted. Only different configurations are explained.

That is, at this tightening, the sleeve members 13, the flange members 14, the annular members 15, and the ring members 16 are provided like the tightening of the first connection holes 7 and the insertion holes 10. However, each of the second connection holes 9 does not have the positioning hole portion, unlike the first connection hole 7. Accordingly, the other end portions of the sleeve members 13, and the ring members 16 are directly disposed within the second connection holes 9. Moreover, the outer circumference surface 16a of each of the ring members 16 is abutted on the inner circumference surface of each of the second connection holes 9.

Furthermore, the shaft portion 18a of each of the second tightening bolts 18 has a length shorter than that of the shaft portion 11a of one of the first tightening bolts 11. Each of the second tightening bolts 18 includes a seat portion 18c which is integrally formed on a side of a base portion of the head portion 18b (a side of the shaft portion 18a), and which has a flange shape. The seat portion 18c of each of the second tightening bolts 18 has a large outside diameter for ensuring an abutment area with the second yoke 5 to suppress the slippage.

Besides, in this case, the end surface of the second tightening bolt 18 on a side of the base end portion of the head portion 18b, and the other end surface of the sleeve member 13 confront each other through the second connection hole 9. In this case, an amount of the engagement of the sleeve member 13 with respect to the second connection hole 9 in the axial direction is set to be shorter than the axial length of the second connection hole 9. With this, as shown in FIG. 3 and FIG. 4, the end surface of the second tightening bolt 18 on the side of the base end portion of the head portion 18b, and the other end surface of the sleeve member 13 are not contacted with each other through a space portion 20 within the second connection hole 9.

### [Operations and Effects of First Embodiment]

Accordingly, in this embodiment, when a torque (power) which is outputted from an engine (not shown) that is a power source, and whose a speed is varied by the transmission is transmitted to the first yoke 4, the torque is transmitted to the propeller shaft 1 through a continuous torque transmitting path from the bifurcated arms 4a of the first yoke 4 through the annular plate 6, from the annular plate 6 through the bifurcated arms 5b of the second yoke 5, as shown by arrows in FIG. 4.

In this case, the torque is transmitted from the first yoke 4 to the annular plate 6 based on the axial force (tightening force) generated between the first tightening bolts 11 and the nuts 12. Moreover, in this embodiment, the torque transmission is directly performed by the shearing force generated in the ring members 16.

Specifically, when the bifurcated arm 4a of the first yoke 4 is rotated, the shearing force in the rotation direction is generated in the ring member 16 by receiving the force from the inner circumference surface of the positioning hole portion 7a of the first connection hole 7. Then, by receiving the shearing force, the ring member 16, and the sleeve member 13 on which the ring member 16 is press-fit are rotated as a unit with the bifurcated arms 4a. Accordingly, the annular plate 6 receives the rotational force through the sleeve member 13 to transmit the torque.

With this, the slippage is hard to be generated between the first yoke 4 and the annular plate 6, relative to a configuration in which the torque is transmitted only by the axial force. Accordingly, it is possible to effectively suppress the looseness of the first tightening bolts 11.

Besides, the annular plate 6 and the second yoke are tightened by the identical configuration. Accordingly, it is possible to attain the identical effects and the identical operations.

Moreover, when the axial vibration is generated between the first yoke 4 and the second yoke 5 at the torque transmission, it is possible to absorb this vibration by the axial elastic shape variation of the annular plate 6.

Furthermore, in this embodiment, the ring members 16 are provided between the sleeve members 13 and the first connection holes 7 (the second connection holes 9), as described above. With this, the torque is transmitted through the ring members 16 based on the shearing force.

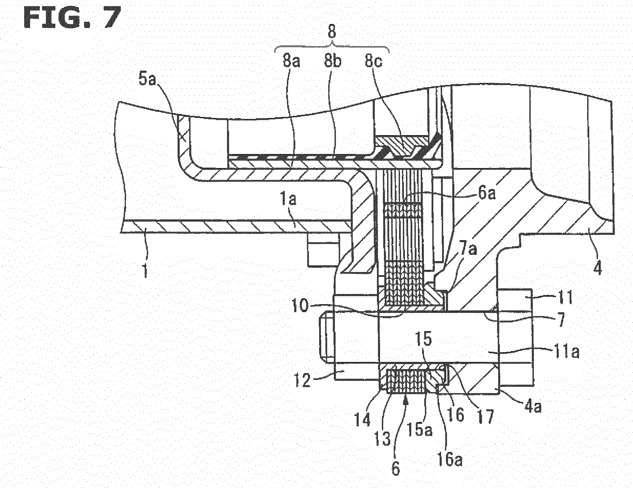

Accordingly, for example, even in a case where the inside diameters of the first connection holes 7 (the positioning hole portion 7a) of the first yoke 4 is varied to a large diameter in accordance with a variation of the specification of the vehicle, and so on, as shown in FIG. 7, it is possible to obtain the identical effects and the identical operations only by replacing the annular member 15 and the ring member 16 which are integrally formed with each other, by the ring member 16 having the large thickness.

Accordingly, in this embodiment, it can be mounted to the yoke having the different design only by the variation of the specifications of the annular member 15 and the ring member 16. Consequently, it is unnecessary to vary the specifications of the plurality of the constituting elements in accordance with the yokes, and to reprocess the members of the annular plate and so on which has the complicated shape. Therefore, it is possible to simplify the operation process, and to decrease the cost.

Moreover, in this embodiment, each of the annular members 15 and one of the ring members 16 are integrally formed. Furthermore, the annular members 15 are used as the washers. With this, it is possible to receive the axial force (the tightening force) by the annular members 15, and thereby to stabilize the bolt tightening. Moreover, a new washer needs not to be provided as an independent member (different member), so that it is possible to suppress the increase of the number of the components.

Furthermore, in this embodiment, each of the sleeve members 13 and one of the flange members 14 are integrally formed with each other. Moreover, the flange members 14 are used as the washer. Accordingly, the annular plate 6 is clamped between the flange members 14 and the annular members 15. Consequently, it is possible to further stabilize the bolt tightening, and to further decrease the number of the components.

Furthermore, each of the annular members 15 and one of the ring members 16 are mounted on the outer circumference of one of the sleeve members 13. Accordingly, at the assembling operation, it is possible to unitize the sleeve member 13 and the flange member 14, the annular member 15 and the ring member 16, and the annular plate 6. Consequently, it is possible to easily assemble the shaft coupling 3.

In particular, in this embodiment, each of the annular members 15 and one of the ring members 16 are mounted with respect to one of the sleeve members 13 by the press fit. Accordingly, it is possible to effectively suppress the unintended detachment of the ring members 16 and the annular members 15 from the sleeve members 13, and to further improve the assembly characteristics.

Moreover, in this embodiment, each of the annular members 15 includes the chamfering portion 15a formed on the outer circumference edge of the annular member 15 on the side of the annular plate 6. Accordingly, it is possible to suppress the fretting (the damage due to the abrasion) due to the contact of the annular members 15 on the outer circumference edge of the annular plate 6.

Furthermore, in this embodiment, each of the flange members 14 integrally formed with one of the sleeve members 13 is provided at a position to avoid the above-described torque transmitting path (cf. the arrows in FIG. 4). Accordingly, the stress is not concentrated to the base portions between the flange members 14 and the sleeve members 13 at the torque transmission. Consequently, it is possible to effectively suppress the breakage of the sleeve members 13, and so on.

On the other hand, each of the annular members 15 provided in the torque transmitting path has a diameter larger than that of one of the flange members 14. With this, the abutment areas of the annular members 15 with respect to the yokes 4 and 5, and the annular plate 6 are increased. Accordingly, it is possible to improve the transmitting efficiency of the torque.

Moreover, in this embodiment, at the connection between the second yoke 5 and the annular plate 6, the head portions 18b of the second tightening bolts 18, and the sleeve members 13 are separated from each other through the space portions 20. With this, it is unnecessary to process the chamfering portion which is formed at the base portion between the head portion 18b and the shaft portion 18a of the second tightening bolt 18 in consideration of the abutment characteristic with the tip end surface of the sleeve member 13, and thereby to simplify the operation process.

Furthermore, in this embodiment, the annular plate 6 is constituted by the laminated plates. Accordingly, it is possible to form the shaft coupling 3 with a relatively light weight. Moreover, it is possible to absorb the bending displacement (the bending deflection), and to improve the efficiencies of the torque transmission and the vibration suppression.

### [Second Embodiment]

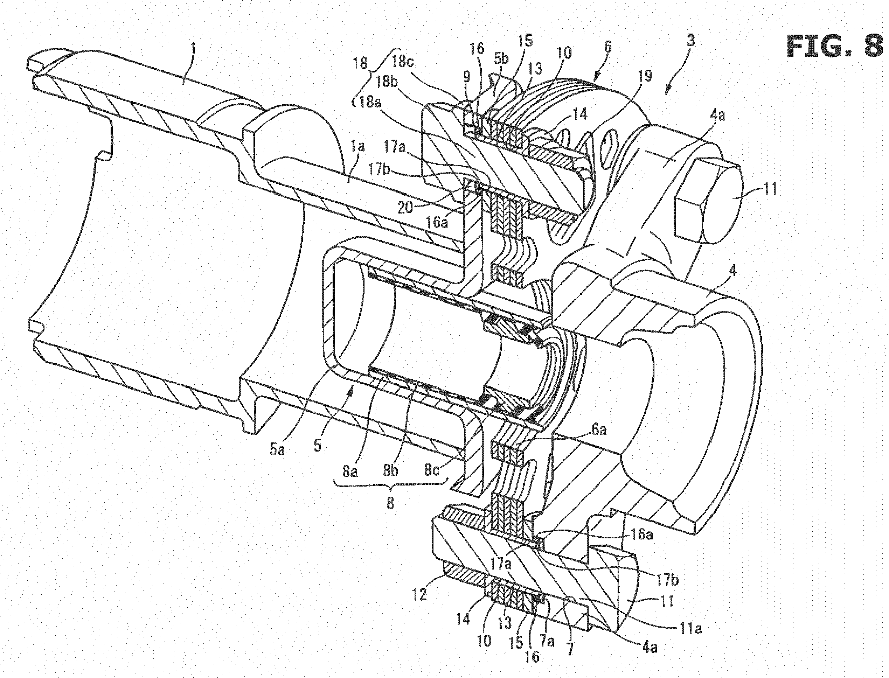

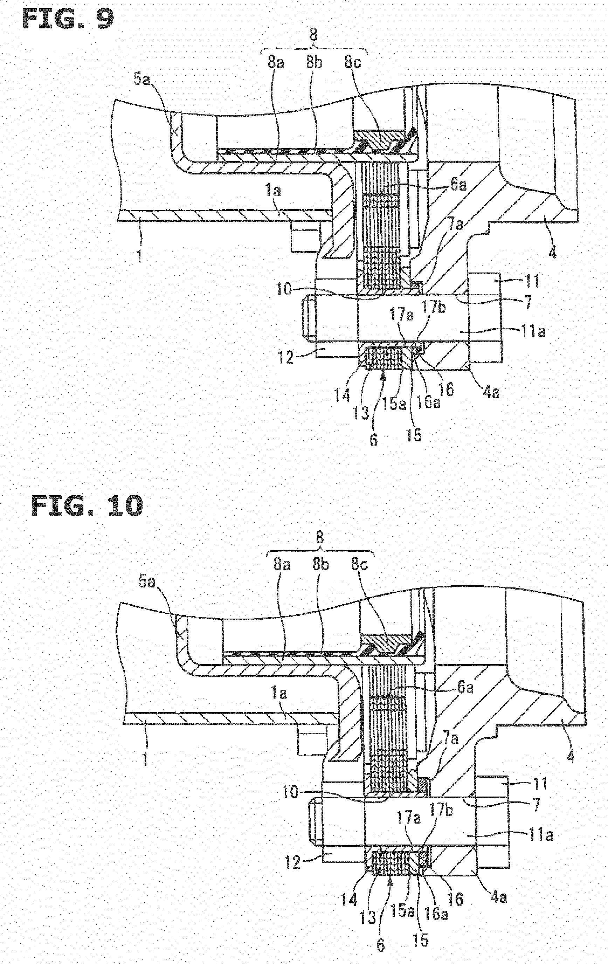

FIG. 8 and FIG. 9 show a second embodiment of the present invention. The second embodiment has a basic configuration identical to that of the first embodiment. However, the annular members 15 and the ring members 16 are independent members (different members). Accordingly, the annular members 15 and the ring members 16 have, respectively, through holes 17a and 17b which have the substantially same inside diameter, and which penetrate in the axial direction. The annular members 15 and the ring members 16 are fixed, respectively, through the through holes 17a and 17b on the other end portions of the sleeve members 13 by the press fit.

In this embodiment, the annular member 15 and the ring member 16 are different members. Accordingly, it is possible to further facilitate the handling of the variations of the specification and the shape of the first and second yokes 4 and 5, and so on.

Accordingly, for example, even in a case where the inside diameter of each of the first connection holes 7 (the positioning hole portion 7a) of the first yoke 4 is varied to a large diameter in accordance with the variation of the specification of the vehicle, and so on, as shown in FIG. 10, it is possible to obtain the identical effects and the identical operations only by replacing the ring member 16 by the ring member 16 having the large thickness, and by remaining the annular member 15 unchanged.

Moreover, in the annular member 15, the existing washer member can be used without change. Accordingly, it is possible to decrease the process forming the annular member 15, and the cost for the forming process, by using the existing washer.

The present invention is not limited to the configurations of the above-described embodiments. The configurations can be varied as long as it is not deviated from the gist of the invention.

For example, in the embodiments, the first yoke 4 and the annular plate 6 are tightened by the first tightening bolts 11 and the nuts 12. However, the tightening method is not limited to this as long as the first yoke 4 and the annular plate 6 are connected to rotate as a unit with each other based on the axial force. That is, an internal screw groove may be formed on the inner circumference surface of the first connection hole 7. An external screw portion of the bolt inserted from the side of the annular plate 6 to the insertion hole 10 and the first connection hole 7 may be screwed in the internal screw groove. This may be also applied to the tightening between the second yoke 5 and the annular plate 6.

For example, below-described aspects are considerable as the power transmission device according to the above-described embodiments.

In one aspect, a power transmission device includes: a coupling member which has a annular shape, which includes an insertion hole, and which has an elastic force in an axial direction; a connection member which includes a connection hole, and which is connected to the coupling member by a bolt inserted through the connection hole and the insertion hole; a sleeve member which is disposed within the connection hole and the insertion hole, and within which the bolt is inserted; and a ring member which is disposed within the connection hole, which includes an outer circumference surface abutted on an inner circumference surface of the connection hole, and which includes a through hole through which the sleeve member is inserted to penetrate.

In a preferable aspect of the power transmission device, the connection member includes a first connection member disposed on one end side of the coupling member in the axial direction; and a second connection member disposed on the other end side of the coupling member in the axial direction.

In another preferable aspect of the power transmission device, in one of aspects of the power transmission devices, the power transmission member includes an annular member which is disposed between the coupling member and the connection member, and through which the sleeve member is inserted to penetrate; and the ring member is integrally formed with the annular member.

In another preferable aspect of the power transmission device, in one of aspects of the power transmission devices, the ring member is mounted on an outer circumference of the sleeve member.

In another preferable aspect of the power transmission device, in one of aspects of the power transmission devices, the ring member is press-fit on the outer circumference of the sleeve member.

In another preferable aspect of the power transmission device, in one of aspects of the power transmission devices, the annular member is clamped between the connection member and the coupling member by a tightening force of the bolt.

In another preferable aspect of the power transmission device, in one of aspects of the power transmission devices, the annular member includes a chamfering portion formed on an outer circumference edge of a surface abutted on the coupling member.

In another preferable aspect of the power transmission device, in one of aspects of the power transmission devices, the power transmission device includes a flange member including one end surface abutted on the coupling member.

In another preferable aspect of the power transmission device, in one of aspects of the power transmission devices, the flange member is integrally formed with the sleeve member; and the flange member is provided at a position to avoid a torque transmitting path in which a torque is transmitted from the first connection member through the coupling member to the second connection member.

In another preferable aspect of the power transmission device, in one of aspects of the power transmission devices, the annular member has a diameter larger than a diameter of the flange member.

In another preferable aspect of the power transmission device, in one of aspects of the power transmission devices, the bolt is inserted into the connection hole from a side of the connection member toward a side of the coupling member; and the sleeve member and a head portion of the bolt are separated from each other through a space portion within the connection hole.

In another point of view, a power transmission device includes: a coupling member which has an annular shape, and which has an elastic force in an axial direction; a connection member integrally fixed to the drive shaft, and connected to the coupling member; a sleeve member which is disposed within an insertion hole formed in the coupling member, and a connection hole formed in the connection member, and through which a bolt tightening the coupling member and the connection member is inserted; and a ring member which includes an outer circumference surface engaged with an inner circumference surface of the connection hole, and a through hole through which the sleeve member is inserted to penetrate.

In a preferable aspect of the power transmission device, the power transmission member includes an annular member which is disposed between the coupling member and the connection member, and through which the sleeve member is inserted to penetrate; and the ring member is integrally formed with the annular member.

In another preferable aspect of the power transmission device, in one of aspects of the power transmission devices, the power transmission device includes a flange member including one end surface abutted on the coupling member.

In another preferable aspect of the power transmission device, in one of aspects of the power transmission devices, the annular member is clamped between the connection member and the coupling member by a tightening force of the bolt.

In another preferable aspect of the power transmission device, in one of aspects of the power transmission devices, the ring member is mounted on an outer circumference of the sleeve member.

In another preferable aspect of the power transmission device, in one of aspects of the power transmission devices, the ring member is press-fit on the outer circumference of the sleeve member.

In another preferable aspect of the power transmission device, in one of aspects of the power transmission devices, the coupling member is a laminated plate in which a plurality of plate members are laminated.

Moreover, in another point of view, a power transmission device includes: a tube member arranged to transmit a power of a power source to a differential gear; a connection member fixed to the tube member; a coupling member which has an annular shape, which has an elastic force in an axial direction, and which is connected to the connection member; a sleeve member which is disposed within an insertion hole formed in the coupling member, and a connection hole formed in the connection member, and through which a bolt tightening the coupling member and the connection member is inserted; and a washer member which extends from a through hole through which the sleeve member is inserted to penetrate, and a hole edge of the through hole on a side of the connection member, and which includes an engagement raised portion that has an outer circumference surface engaged with an inner circumference surface of the connection hole.

## Claims

1. A power transmission device comprising:
a coupling member which has an annular shape, which includes an insertion hole, and which has an elastic force in an axial direction;
a connection member which includes a connection hole, and which is connected to the coupling member by a bolt inserted through the connection hole and the insertion hole;
a sleeve member which is disposed within the connection hole and the insertion hole, and within which the bolt is inserted; and
a ring member which is disposed within the connection hole, which includes an outer circumference surface abutted on an inner circumference surface of the connection hole, and which includes a through hole through which the sleeve member is inserted to penetrate.

2. The power transmission device as claimed in claim 1, wherein the connection member includes a first connection member disposed on one end side of the coupling member in the axial direction; and a second connection member disposed on the other end side of the coupling member in the axial direction.

3. The power transmission device as claimed in claim 2, wherein the power transmission member includes an annular member which is disposed between the coupling member and the connection member, and through which the sleeve member is inserted to penetrate; and the ring member is integrally formed with the annular member.

4. The power transmission device as claimed in claim 3, wherein the ring member is mounted on an outer circumference of the sleeve member.

5. The power transmission device as claimed in claim 4, wherein the ring member is press-fit on the outer circumference of the sleeve member.

6. The power transmission device as claimed in claim 4, wherein the annular member is clamped between the connection member and the coupling member by a tightening force of the bolt.

7. The power transmission device as claimed in claim 6, wherein the annular member includes a chamfering portion formed on an outer circumference edge of a surface abutted on the coupling member.

8. The power transmission device as claimed in claim 3, wherein the power transmission device includes a flange member including one end surface abutted on the coupling member.

9. The power transmission device as claimed in claim 8, wherein the flange member is integrally formed with the sleeve member; and the flange member is provided at a position to avoid a torque transmitting path in which a torque is transmitted from the first connection member through the coupling member to the second connection member.

10. The power transmission device as claimed in claim 9, wherein the annular member has a diameter larger than a diameter of the flange member.

11. The power transmission device as claimed in claim 1, wherein the bolt is inserted into the connection hole from a side of the connection member toward a side of the coupling member; and the sleeve member and a head portion of the bolt are separated from each other through a space portion within the connection hole.

12. A power transmission device comprising:
a coupling member which has an annular shape, and which has an elastic force in an axial direction;
a connection member integrally fixed to the drive shaft, and connected to the coupling member;
a sleeve member which is disposed within an insertion hole formed in the coupling member, and a connection hole formed in the connection member, and through which a bolt tightening the coupling member and the connection member is inserted; and
a ring member which includes an outer circumference surface engaged with an inner circumference surface of the connection hole, and a through hole through which the sleeve member is inserted to penetrate.

13. The power transmission device as claimed in claim 12, wherein the power transmission member includes an annular member which is disposed between the coupling member and the connection member, and through which the sleeve member is inserted to penetrate; and the ring member is integrally formed with the annular member.

14. The power transmission device as claimed in claim 13, wherein the power transmission device includes a flange member including one end surface abutted on the coupling member.

15. The power transmission device as claimed in claim 14, wherein the annular member is clamped between the connection member and the coupling member by a tightening force of the bolt.

16. The power transmission device as claimed in claim 15, wherein the ring member is mounted on an outer circumference of the sleeve member.

17. The power transmission device as claimed in claim 16, wherein the ring member is press-fit on the outer circumference of the sleeve member.

18. The power transmission device as claimed in claim 12, wherein the coupling member is a laminated plate in which a plurality of plate members are laminated.

19. A power transmission device comprising:
a tube member arranged to transmit a power of a power source to a differential gear;
a connection member fixed to the tube member;
a coupling member which has an annular shape, which has an elastic force in an axial direction, and which is connected to the connection member;
a sleeve member which is disposed within an insertion hole formed in the coupling member, and a connection hole formed in the connection member, and through which a bolt tightening the coupling member and the connection member is inserted; and
a washer member which extends from a through hole through which the sleeve member is inserted to penetrate, and a hole edge of the through hole on a side of the connection member, and which includes an engagement raised portion that has an outer circumference surface engaged with an inner circumference surface of the connection hole.
